# EUROPÄISCHE PATENTANMELDUNG

(11) **EP 4 782 300 A1**
(43) Veröffentlichungstag der Anmeldung: **29.07.2026**
(21) Anmeldenummer: 26152920.0
(22) Anmeldetag: 20.01.2026
(51) Int. Cl.: B61B 7/00, B61B 12/06, E04H 12/00

(54) **VERFAHREN ZUR ÜBERWACHUNG EINER SEILBAHN**

(30) Priorität: 22.01.2025 AT 500322025
(71) Anmelder: Innova Patent GmbH, 6922 Wolfurt (AT)
(72) Erfinder: Heynen, Severin, 6374 Buochs (CH)
(74) Vertreter: Weiss Patentanwalts GmbH

(57) **Zusammenfassung**

Es wird ein Verfahren zur verbesserten Überwachung einer Seilbahn (20) offenbart, um die Sicherheit insbesondere im Betrieb zu erhöhen, wobei mit einer Anzahl an Sensoren (3) an zumindest einer Seilbahnstütze (1) während des Betriebs oder im Stillstand der Seilbahn (20) in zumindest einem Zeitpunkt (t) gleichzeitig ein Längsmesswert (X) und ein Quermesswert (Y, Z) erfasst werden, wobei eine Auswerteeinheit (4) der Seilbahn (20) den im zumindest einen Zeitpunkt (t) gleichzeitig erfassten Längsmesswert (X) und Quermesswert (Y, Z) von der Anzahl an Sensoren (3) empfängt und verarbeitet, wobei in der Auswerteeinheit (4) eine definierte mathematische Verknüpfung zwischen dem im zumindest einen Zeitpunkt (t) gleichzeitig erfassten Längsmesswert (X) und Quermesswert (Y, Z) hergestellt wird und ein Ergebnis aus der definierten mathematischen Verknüpfung ermittelt wird, wobei wenn durch das ermittelte Ergebnis eine vorgegebene Bedingung erfüllt wird, die Auswerteeinheit (4) ein Problem mit der Seilbahn (20) an eine Steuereinheit (5) der Seilbahn (20) für die Überwachung signalisiert und die Steuereinheit (5) die Seilbahn (20) abhängig von dem durch die Auswerteeinheit (4) signalisierten Problem steuert.

## Beschreibung

### Technisches Gebiet der Erfindung

Die gegenständliche Erfindung betrifft ein Verfahren zur Überwachung einer Seilbahn, wobei im Betrieb der Seilbahn eine Anzahl an Seilbahnfahrzeugen an einem Förderseil in eine Förderrichtung entlang einer Anzahl an Seilbahnstützen bewegt wird, wobei eine Anzahl an Sensoren an zumindest einer der Seilbahnstützen vorgesehen ist und mit der Anzahl an Sensoren eine Bewegung der Seilbahnstütze entlang der Förderrichtung als ein Längsmesswert erfasst wird und zumindest eine Bewegung der Seilbahnstütze quer zur Förderrichtung als ein Quermesswert entlang einer Quermessrichtung erfasst wird. Die gegenständliche Erfindung betrifft zudem eine Seilbahn mit der erfindungsgemäßen Überwachung.

### Stand der Technik

Seilbahnen sind in verschiedensten Ausführungsformen bekannt, meist zum Personen- und/oder Gütertransport, beispielsweise als städtisches Verkehrsmittel oder für den Personentransport in Skigebieten. Dabei werden Seilbahnfahrzeuge wie z.B. Kabinen oder Sessel ohne feste Führungen von einem oder mehreren (Draht-)Seilen getragen und in der Luft hängend bewegt. Daneben sind auch Seilbahnen, sogenannte Kombi-Bahnen, bekannt, die einen Mischbetrieb mit Kabinenfahrzeugen und Sesselfahrzeugen als Seilbahnfahrzeugen ermöglichen. Seilbahnen werden in der Regel in unwegsamem Gelände verwendet, meist für Bergstrecken, beispielsweise in Skigebieten, um Personen und/oder Gegenstände vom Tal auf einen Berg zu befördern, aber auch im urbanen Bereich zur Personenbeförderung. In der Regel weisen Seilbahnen zumindest zwei Seilbahnstationen auf, zwischen denen die Seilbahnfahrzeuge bewegt werden.

Zu unterscheiden sind dabei Umlaufbahnen und Pendelbahnen. Bei Pendelbahnen verkehren ein oder zwei Seilbahnfahrzeuge, gezogen von einem Zugseil, auf einem Förderseil zwischen zwei Seilbahnstationen pendelnd hin und zurück. Die Umlaufseilbahn hingegen hat zwischen den Seilbahnstationen ein endloses, ständig umlaufendes Förderseil, an dem eine Vielzahl von Seilbahnfahrzeugen wie Kabinen oder Sesseln hängend angeordnet sind. Die Seilbahnfahrzeuge werden dadurch auf einer Seite von einer Seilbahnstation zur anderen und auf der Gegenseite wieder zurückbewegt. Die Bewegung der Seilbahnfahrzeuge erfolgt daher immer im Wesentlichen kontinuierlich in eine Richtung, analog eines Stetigförderers.

Bei modernen Umlaufbahnen sind die Seilbahnfahrzeuge in der Regel nicht fest mit dem Förderseil verbunden, sondern mittels öffenbaren Seilklemmen lösbar verbunden. Dadurch können die Seilbahnfahrzeuge in den Seilbahnstationen vom Förderseil abgekoppelt werden und mit einer relativ zur Geschwindigkeit des Förderseils geringeren Geschwindigkeit durch die Seilbahnstation bewegt werden. Bei der Ausfahrt aus der Seilbahnstation werden die Seilbahnfahrzeuge dann wieder mittels der Seilklemmen am Förderseil festgeklemmt. In der Regel sind die Seilbahnfahrzeuge in einem definierten Abstand voneinander am Förderseil (lösbar) befestigt. Um insbesondere eine möglichst gleichmäßige Belastung des Förderseils zu gewährleisten, sind die Abstände zwischen den Seilbahnfahrzeugen an einer Seilbahn meist (in etwa) gleich groß.

Um auch größere Distanzen überbrücken zu können, sind zwischen den beiden Seilbahnstationen in der Regel eine Anzahl an Seilbahnstützen zur Führung des/der (Trag-/Zug-)Seile angeordnet. Seilbahnstützen können als Stahlfachwerkkonstruktion, aber auch als Stahlrohr- oder Blechkastenkonstruktion ausgeführt sein. An einer Seilbahnstütze sind meist mehrere Seilrollen angeordnet, beispielsweise in Form einer sogenannten Rollenbatterie, um das Seil zu tragen und zu führen. In der Regel führen die Abstände zwischen den Seilbahnfahrzeugen dazu, dass sich an einer Seilbahnstütze (zumindest in einer Fahrtrichtung) zwischen einem Einfahrtsbereich in die Rollenbatterie und einem Ausfahrtsbereich aus der Rollenbatterie jeweils nur ein Seilbahnfahrzeug befindet.

Zur Erhöhung der Betriebssicherheit der Seilbahn und damit der Sicherheit für die Passagiere wird in EP 3 375 686 A1 oder in EP 3 620 340 B1 vorgeschlagen, an den Rollenbatterien Sensoren vorzusehen, um den Betrieb zu überwachen.

Im Betrieb der Seilbahn kann es unter Umständen dazu kommen, dass sich bei Durch- bzw. Überfahrt des Seilbahnfahrzeugs an der Seilbahnstütze, das Seilbahnfahrzeug verklemmt, insbesondere die Seilklemme des Seilbahnfahrzeugs in der Rollenbatterie oder ein Beförderungskörper des Seilbahnfahrzeug an der Seilbahnstütze selbst, und das Seilbahnfahrzeug somit blockiert. Die Seilklemmen sind aus Sicherheitsgründen in der Regel so ausgelegt, dass diese ab einem bestimmten Widerstand zwischen Seilbahnfahrzeug und Förderseil ein Durchrutschen des Förderseils zulassen (natürlich ohne die Klemme zu lösen). Das beschriebene Szenario könnte folglich dazu führen, dass das Seilbahnfahrzeug im Bereich einer Rollenbatterie blockiert und das Förderseil im Wesentlichen mit unveränderter Geschwindigkeit relativ zum Seilbahnfahrzeug durch die Seilklemme bewegt wird.

Ein blockiertes Seilbahnfahrzeug kann von einer Steuereinheit der Seilbahn nicht ohne weiteres erkannt werden. Wenn die Seilbahnstütze von einer Seilbahnstation nicht einsehbar ist, kann ein blockiertes Seilbahnfahrzeug auch nicht vom Betriebspersonal erkannt werden.

### Zusammenfassung der Erfindung

Es ist daher eine Aufgabe der gegenständlichen Erfindung, die Überwachung einer Seilbahn zu verbessern, um damit die Sicherheit der Seilbahn, insbesondere im Betrieb, zu erhöhen.

Erfindungsgemäß wird die Aufgabe dadurch gelöst, dass mit der Anzahl an Sensoren während des Betriebs oder im Stillstand der Seilbahn in zumindest einem Zeitpunkt gleichzeitig Längsmesswert und Quermesswert erfasst wird, wobei eine Auswerteeinheit der Seilbahn den im zumindest einen Zeitpunkt gleichzeitig erfassten Längsmesswert und Quermesswert von der Anzahl an Sensoren empfängt und verarbeitet, wobei in der Auswerteeinheit eine definierte mathematische Verknüpfung zwischen dem im zumindest einen Zeitpunkt gleichzeitig erfassten Längsmesswert und Quermesswert hergestellt wird und ein Ergebnis aus der definierten mathematischen Verknüpfung ermittelt wird, wobei wenn durch das ermittelte Ergebnis eine vorgegebene Bedingung erfüllt wird, die Auswerteeinheit ein Problem an der Seilbahn an eine Steuereinheit der Seilbahn für die Überwachung signalisiert und die Steuereinheit die Seilbahn abhängig von dem durch die Auswerteeinheit signalisierten Problem steuert.

Im Betrieb der Seilbahn aber auch im Stillstand der Seilbahn kann es zu problematischen Ereignissen kommen, welche ein charakteristisches Bewegungsmuster der Seilbahnstütze auslösen, z.B. eine Verdrehung der Seilbahnstütze um eine Hochachse und/oder eine Neigung der Seilbahnstütze in Richtung einer Längs- oder Querachse. Ein problematisches Ereignis kann beispielsweise ein Blockieren eines Seilbahnfahrzeugs während der Durchfahrt entlang einer Seilbahnstütze oder ein Fall eines Baumes auf das Förderseil in der Nähe der Seilbahnstütze sein. Erfindungsgemäß wird ein gleichzeitiges Erfassen von Längs- und Quermesswert mit der Anzahl an Sensoren an der Seilbahnstütze und anschließendem Auswerten vorgeschlagen. Damit ist es möglich, derartige Ereignisse an oder in der Nähe der Seilbahnstütze(n), welche von der Steuereinheit der Seilbahn oder vom Betriebspersonal bisher unerkannt blieben, durch das im Wesentlichen gleichzeitige Auftreten des (erhöhten) Längs- und Quermesswerts als Problem an der Seilbahn zu erkennen. Das Verfahren kann zudem einfach und flexibel für bestehende Seilbahnen nachgerüstet werden.

Vorzugsweise wird mit der Anzahl an Sensoren eine Mehrzahl an Quermesswerten, vorzugsweise zwei Quermesswerte, erfasst, wobei zumindest zwei der Mehrzahl an Quermesswerten in unterschiedliche Quermessrichtungen erfasst werden. Durch Auswerten des Längsmesswerts und der Mehrzahl an Quermesswerten wird die Genauigkeit in der Erkennung von problematischen Ereignissen an oder in der Nähe der Seilbahnstütze(n) erhöht.

Vorzugsweise werden im Betrieb der Seilbahn mit der Anzahl an Sensoren an der zumindest einen Seilbahnstütze während einer Durchfahrt eines der Seilbahnfahrzeuge entlang der Seilbahnstütze in zumindest einem Zeitpunkt gleichzeitig Längsmesswert und Quermesswert erfasst, wobei wenn durch das daraus ermittelte Ergebnis die vorgegebene Bedingung erfüllt wird, signalisiert die Auswerteeinheit ein Problem in der Durchfahrt des Seilbahnfahrzeugs an der Seilbahnstütze an die Steuereinheit der Seilbahn für eine Durchfahrtsüberwachung und die Steuereinheit steuert die Seilbahn abhängig von dem durch die Auswerteeinheit signalisierten Problem. Insbesondere bei Durchfahrten der Seilbahnfahrzeuge entlang der einzelnen Seilbahnstützen kann es zu problematischen Ereignissen kommen, wenn sich beispielsweise eine Seilklemme des Seilbahnfahrzeug in einer Rollenbatterie der Seilbahnstütze oder ein Beförderungskörper des Seilbahnfahrzeug an der Seilbahnstütze selbst verhakt. Diese problematischen Ereignisse lösen charakteristische Bewegungsmuster der Seilbahnstütze aus, welche in einfacher Weise mit dem erfindungsgemäßen Verfahren erfasst werden können, um die Seilbahn dementsprechend zu steuern.

Vorzugsweise wird mit der Anzahl an Sensoren als Längsmesswert und als Quermesswert jeweils eine Beschleunigung erfasst. Bei problematischen Ereignissen, wie etwa dem Blockieren eines Seilbahnfahrzeugs oder einem Fall eines Baumes auf das Förderseil, wird dies insbesondere in einer schlagartigen und erhöhten Beschleunigung der Seilbahnstütze in die Messrichtungen der Anzahl an Sensoren erkennbar, wodurch die Erfassung der Beschleunigungen besonders vorteilhaft ist.

Vorzugsweise wird mit der Anzahl an Sensoren gleichzeitig der Längsmesswert und der Quermesswert in mehreren Zeitpunkten während des Betriebs der Seilbahn erfasst, besonders bevorzugt während der Durchfahrt eines der Seilbahnfahrzeuge entlang der Seilbahnstütze, oder im Stillstand der Seilbahn. Damit kann sichergestellt werden, dass problematische Ereignisse zuverlässig erkannt werden. Zudem können die Zeitpunkte bzw. die Zeitabstände zwischen den Zeitpunkten von dem Betrieb und/oder der Ausführungsform der Seilbahn abhängig festgelegt werden, wodurch das Verfahren flexibel einsetzbar und individuell an die konkrete Seilbahn anpassbar ist.

Als mathematische Verknüpfung wird bevorzugt eine Addition, Multiplikation oder Korrelation definiert. Für das erfindungsgemäße Verfahren können verschiedene mathematische Verknüpfungen verwendet werden, wodurch sich die Flexibilität des Verfahrens weiter erhöht.

Als Bedingung wird vorzugsweise ein Überschreiten eines definierten Maximalwerts durch das ermittelte Ergebnis aus der mathematischen Verknüpfung vorgegeben. Dabei wird bevorzugt der Maximalwert vom Betrieb der Seilbahn, vorzugsweise von einer Fördergeschwindigkeit der Seilbahnfahrzeuge am Förderseil, und/oder von der Ausführungsform der Seilbahn abhängig definiert. Dadurch ist es möglich sehr individuell in Abhängigkeit der konkreten Seilbahn (z.B. Anzahl und Art der Stützen, Betriebsmodus, etc.) einen entsprechend passenden Maximalwert zu bestimmen. Beispielsweise wird die vorgegebene Bedingung, insbesondere der Maximalwert, durch eine Kalibrierung vorab bestimmt.

Die Auswerteeinheit verarbeitet vorzugsweise den im zumindest einen Zeitpunkt gleichzeitig erfassten Längsmesswert und Quermesswert zusätzlich, indem die Auswerteeinheit einen Absolutwert des Längsmesswerts und einen Absolutwert des Quermesswerts bestimmt, um daraus die definierte mathematische Verknüpfung herzustellen und das Ergebnis aus der definierten mathematischen Verknüpfung zu ermitteln. Mit dieser Vorverarbeitung kann unabhängig der Orientierung der Messrichtung der Anzahl an Sensoren bzw. unabhängig vom Vorzeichen des Messwerts abhängig von der Bewegung der Seilbahnstütze in einfacher Weise die erfindungsgemäße Auswertung stattfinden.

Die Aufgabe wird weiters mit einer Seilbahn gelöst, wobei die Anzahl an Sensoren eingerichtet ist, während des Betriebs oder im Stillstand der Seilbahn in zumindest einem Zeitpunkt gleichzeitig Längsmesswert und Quermesswert zu erfassen, wobei die Seilbahn eine Auswerteeinheit umfasst, welche eingerichtet ist, den im zumindest einen Zeitpunkt gleichzeitig erfassten Längsmesswert und Quermesswert von der Anzahl an Sensoren zu empfangen und zu verarbeiten, wobei die Auswerteeinheit weiters eingerichtet ist, eine definierte mathematische Verknüpfung zwischen den im zumindest einen Zeitpunkt gleichzeitig erfassten Längsmesswert und Quermesswert herzustellen und ein Ergebnis aus der definierten mathematischen Verknüpfung zu ermitteln, wobei die Seilbahn eine Steuereinheit umfasst, wobei die Auswerteeinheit eingerichtet ist, ein Problem an der Seilbahn an die Steuereinheit für eine Überwachung der Seilbahn zu signalisieren, wenn durch das ermittelte Ergebnis eine vorgegebene Bedingung, welche in der Auswerteeinheit hinterlegt ist, erfüllt ist, wobei die Steuereinheit eingerichtet ist, die Seilbahn abhängig von dem durch die Auswerteeinheit signalisierten Problem zu steuern. Damit ist es möglich, problematische Ereignisse an oder in der Nähe der Seilbahnstütze(n), welche von der Steuereinheit der Seilbahn oder vom Betriebspersonal bisher unerkannt blieben, durch das im Wesentlichen gleichzeitige Auftreten des (erhöhten) Längs- und Quermesswerts als Problem an der Seilbahn zu erkennen.

In einer bevorzugten Ausführungsform ist als die Anzahl an Sensoren ein Sensor vorgesehen, welcher eingerichtet ist, Längsmesswert und Quermesswert, vorzugsweise zwei Quermesswerte in unterschiedliche Quermessrichtung, zu erfassen. Durch die Verwendung eines Sensors wird die Komplexität verringert. Zudem können komplexere Bewegungen der Seilbahnstütze durch die zwei erfassten Quermesswerte zuverlässig erkannt werden.

Vorzugsweise ist an mehr als einer der Seilbahnstützen, besonders bevorzugt an jeder Seilbahnstütze, der Seilbahn jeweils die Anzahl an Sensoren vorgesehen. Dadurch kann im Wesentlichen die gesamte Seilbahn zwischen den Seilbahnstationen überwacht werden und problematische Ereignisse werden zuverlässig erkannt, wodurch die Sicherheit der Seilbahn erhöht wird.

Vorteilhafterweise ist als jeweiliger Sensor der Anzahl an Sensoren ein Beschleunigungssensor vorgesehen. Bei problematischen Ereignissen, wie etwa dem Blockieren eines Seilbahnfahrzeugs, wird dies insbesondere in einer schlagartigen und erhöhten Beschleunigung der Seilbahnstütze erkennbar, wodurch das Erfassen von Beschleunigungen vorteilhaft ist.

### Figurenbeschreibung

Die gegenständliche Erfindung wird nachfolgend unter Bezugnahme auf die Figuren 1 bis 5b näher erläutert, die beispielhaft, schematisch und nicht einschränkend vorteilhafte Ausgestaltungen der Erfindung zeigen. Dabei zeigt
Fig. 1 eine Seilbahn mit zwei Seilbahnstützen und zwei Seilbahnstationen,
Fig. 2 eine Durchfahrt eines Seilbahnfahrzeugs entlang einer der Seilbahnstützen der Seilbahn in einer Seitenansicht,
Fig. 3 die Seilbahnstütze mit blockierter Seilklemme des Seilbahnfahrzeugs in einer Draufsicht,
Fig. 4a eine Neigung einer Trägerstütze quer zur Förderrichtung in einer Frontansicht,
Fig. 4b eine Neigung der Trägerstütze in Förderrichtung in einer Seitenansicht,
Fig. 5a eine Neigung einer Niederhalterstütze quer zur Förderrichtung in einer Frontansicht, und
Fig. 5b eine Neigung der Niederhalterstütze in Förderrichtung in einer Seitenansicht.

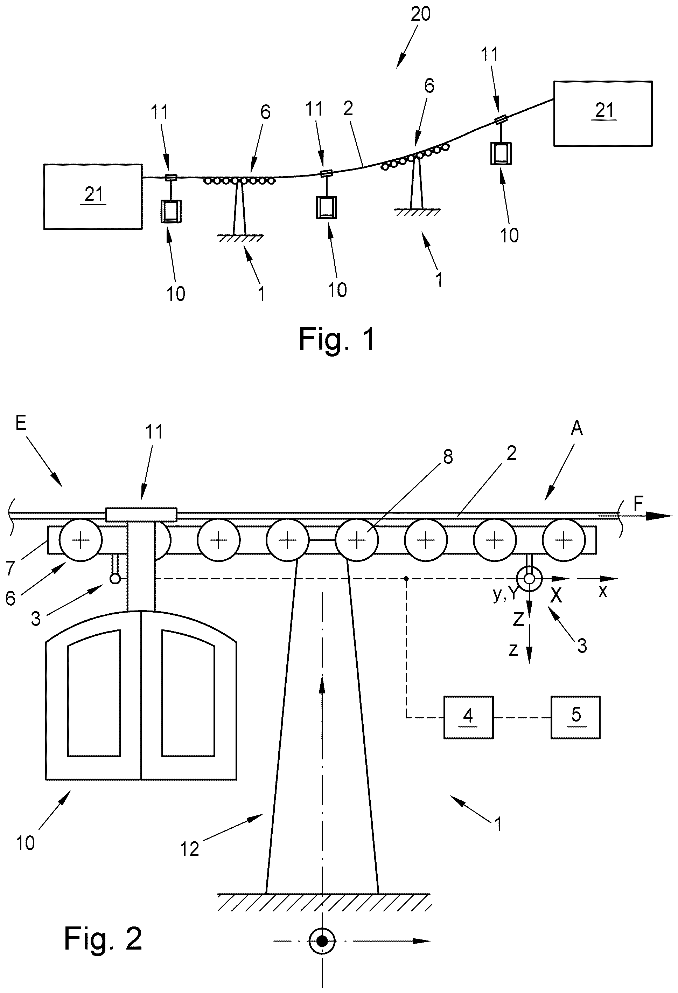

In Fig. 1 ist schematisch und beispielhaft eine Seilbahn 20 dargestellt. Die Seilbahn 20 umfasst zwei Seilbahnstationen 21, z.B. als Endstationen ausgeführte Talstation und Bergstation. Zwischen den zwei Seilbahnstationen 21 wird eine Anzahl von Seilbahnfahrzeugen 10 mittels eines Förderseils 2 bewegt. In Fig. 1 sind beispielhaft drei Seilbahnfahrzeuge 10 dargestellt, wobei in der Regel deutlich mehr Seilbahnfahrzeuge 10 am Förderseil 2 bewegt werden. Die Seilbahnfahrzeuge 10 sind üblicherweise in einem bestimmten vorgegebenen Abstand voneinander beabstandet am Förderseil 2 hängend befestigt, wobei die Befestigung vorzugsweise mittels Seilklemmen 11 (öffenbar oder fix geklemmt) erfolgt. Bei manchen Ausführungsformen der Seilbahn 20 können auch mehrere parallele Förderseile 2 und ggf. ein umlaufendes oder hin und her laufendes Zugseil vorgesehen sein. Die Erfindung wird im folgenden Beispiel ohne Einschränkung der Allgemeinheit allerdings anhand von nur einem umlaufenden Förderseil 2 erläutert. Natürlich ist die Erfindung aber auch auf bekannte Seilbahnen 20 mit mehreren Förderseilen 2 und/oder Zugseilen bzw. Tragseilen anwendbar.

Für den Betrieb der Seilbahn 20 vorgesehene Einrichtungen der Seilbahnstationen 21, wie Seilscheiben, ein Seilbahnantrieb, ein Stationsförderer zum Transportieren von vom Förderseil 2 abgeklemmten Seilbahnfahrzeuge 10 usw., sind hinlänglich bekannt, weshalb diese nicht im Einzelnen dargestellt oder beschrieben werden bzw. soweit beschrieben werden, wie es für das Verständnis der Erfindung erforderlich ist.

Die Seilbahn 20 ist im Ausführungsbeispiel der Fig. 1 als Umlaufbahn, insbesondere als Gondelbahn ausgeführt, wobei die Seilbahnfahrzeuge 10 als Gondel ausgeführt sind. Natürlich wären aber auch andere bekannte Ausführungsformen der Seilbahn 20 denkbar, wie z.B. eine Sesselbahn mit als Sessel ausgeführten Seilbahnfahrzeugen 10 oder auch Schlepplifte mit Bügeln. Auch ein Mischbetrieb mit abwechselnd einer Gondel und einem Sessel als Seilbahnfahrzeuge 10 wäre möglich.

Die Seilbahn 20 umfasst beispielhaft zwei Seilbahnstützen 1, welche zwischen den Seilbahnstationen 21 angeordnet sind. Natürlich ist die Anzahl der Seilbahnstützen 1 von der Ausführungsform der Seilbahn 20 abhängig und ist in der Regel deutlich größer als zwei. Die Anzahl der Seilbahnstützen 1 richtet sich beispielsweise nach der Distanz zwischen den Seilbahnstationen 21 der Seilbahn 20 und nach der zu erwartenden Belastung durch die Seilbahnfahrzeuge 10, aber auch nach der Topologie des Geländes in dem die Seilbahn 20 vorgesehen ist.

Die Seilbahnstützen 1 dienen dazu, das Förderseil 2 zu tragen und zu führen. Dazu ist zumindest eine Rollenbatterie 6 an der Seilbahnstütze 1 angeordnet. Die Rollenbatterie 6 kann einen Längsträger 7 aufweisen, auf dem eine Mehrzahl an Rollen 8 hintereinander angeordnet sind. Die Rollen 8 sind an der Rollenbatterie 6, beispielsweise am Längsträger 7, drehbar gelagert und dienen dazu, das Förderseil 2 zu tragen und seitlich zu führen. Die Rollenbatterie 6 stützt damit die Last des Förderseils 2 inkl. der daran befestigten Seilbahnfahrzeuge 10 über die Seilbahnstütze 1 am Boden ab. Die Rollenbatterie 6 ist üblicherweise an der Seilbahnstütze 1 schwenkbar gelagert, beispielsweise über den Längsträger 7. Je nachdem, ob das Förderseil 2 oberhalb der Rollenbatterie 6 auf den Rollen 8 aufliegend geführt ist oder das Förderseil 2 unterhalb der Rollenbatterie 6 an den Rollen 8 geführt ist, wird die Seilbahnstütze 1 als Trägerstütze oder als Niederhalterstütze bezeichnet. Um beispielswiese einen steilen Hang zu überwinden, wird üblicherweise eine Niederhalterstütze am Beginn des Hangs vorgesehen und am oberen Ende des Hangs wird eine Trägerstütze vorgesehen.

Die Rollenbatterie 6 weist einen Einfahrtsbereich E und einen Ausfahrtsbereich A auf. Im Betrieb der Seilbahn 20 bewegt sich ein Seilbahnfahrzeug 10 in Förderrichtung F durch den Einfahrtsbereich E entlang der an der Seilbahnstütze 1 vorgesehenen Rollenbatterie 6 (wie in Fig. 2 dargestellt) und verlässt die Rollenbatterie 6 bzw. die Seilbahnstütze 1 durch den Ausfahrtsbereich A.

Als "Betrieb der Seilbahn" wird in diesem Zusammenhang die Förderung der Seilbahnfahrzeuge 10 durch das Bewegen des Förderseils 2 in die Förderrichtung F verstanden, wobei im "Stillstand der Seilbahn" die Förderung der Seilbahnfahrzeuge 10 unterbrochen ist und das Förderseil 2 nicht weiter in die Förderrichtung F bewegt wird (z.B. Seilbahnantrieb der Seilbahn 20 ist deaktiviert).

In Fig. 2 ist eine der Seilbahnstützen 1 der Seilbahn 20 dargestellt. Im Betrieb der Seilbahn 20 werden die Seilbahnfahrzeuge 10 an dem Förderseil 2 in die Förderrichtung F entlang der Seilbahnstützen 1 bewegt. Die Förderrichtung F ist im Wesentlichen durch die Längsachse des Förderseils 2 festgelegt, wobei die Förderrichtung F in einem gekrümmten Abschnitt des Förderseils 2 die Tangente an die Seillinie des Förderseils 2 ist.

An zumindest einer der Seilbahnstützen 1 der Seilbahn 20 ist erfindungsgemäß eine Anzahl an Sensoren 3 vorgesehen. Die Anzahl an Sensoren 3 ist dazu eingerichtet, eine Bewegung der Seilbahnstütze 1 entlang der Förderrichtung F als einen Längsmesswert X zu erfassen und zumindest eine Bewegung quer zur Förderrichtung F (im Folgenden auch als Querrichtung bezeichnet) als einen Quermesswert Y, Z zu erfassen. Die Querrichtung ist eine Richtung normal auf die Förderrichtung F, wobei grundsätzlich eine beliebige Normale auf die Förderrichtung F denkbar ist. Die Anzahl an Sensoren 3 weist eine Mehrzahl an unterschiedlichen Messrichtungen auf. Die Anzahl der Sensoren 3 ist dazu ausgebildet, entlang einer ersten Messrichtung x (im Folgenden als Längsmessrichtung bezeichnet) den Längsmesswert X zu erfassen und entlang zumindest einer weiteren Messrichtung y, z (im Folgenden als Quermessrichtung bezeichnet) den Quermesswert Y, Z zu erfassen.

Vorzugsweise wird mit der Anzahl an Sensoren 3 eine Mehrzahl an Quermesswerten Y, Z erfasst, wobei zumindest zwei der Mehrzahl an Quermesswerten Y, Z in unterschiedliche Quermessrichtungen y, z erfasst werden. Besonders bevorzugt weist die Anzahl an Sensoren 3 eine Längsmessrichtung x und zwei unterschiedliche Quermessrichtung y, z auf (wie in Fig. 2 dargestellt), wobei entlang einer der beiden Quermessrichtungen y ein erster Quermesswert Y erfasst wird und entlang der anderen Quermessrichtung z ein zweiter Quermesswert Z erfasst wird. Beispielsweise ist die erste Quermessrichtung y horizontal ausgerichtet entlang welcher der erste Quermesswert Y (als ein Horizontalmesswert) erfasst wird und die zweite Quermessrichtung z ist vertikal ausgerichtet entlang welcher der zweite Quermesswert Z (als ein Vertikalmesswert) erfasst wird, wie in Fig. 2 angedeutet. Natürlich können die unterschiedlichen Quermessrichtungen y, z zueinander auch anders ausgerichtet sein.

Vorzugsweise ist als die Anzahl an Sensoren 3 ein Sensor an der zumindest einen Seilbahnstütze 1 vorgesehen, wobei der Sensor eingerichtet ist, Längsmesswert X und Quermesswert Y, vorzugsweise zwei Quermesswerte Y, Z in die unterschiedlichen Quermessrichtung y, z, zu erfassen. Dadurch wird eine möglichst einfache Ausführungsform der erfindungsgemäßen Überwachung der Seilbahn 20 realisiert. Alternativ kann als die Anzahl an Sensoren 3 auch mehr als ein Sensor an der zumindest einen Seilbahnstütze 1 vorgesehen sein. Für die Erfindung ist entscheidend, dass ein Längsmesswert X und zumindest ein Quermesswert Y, Z mit der Anzahl an Sensoren 3 erfasst wird. Die konkrete Ausführungsform der Anzahl an Sensoren 3 ist für die Erfindung nebensächlich. Beispielsweise ist als der eine Sensor 3 ein mehrachsiger (z.B. zwei- oder dreiachsiger) Sensor, bevorzugt ein mehrachsiger Beschleunigungssensor, vorgesehen. Alternativ oder zusätzlich kann auch eine Anzahl an einachsigen Sensoren 3 vorgesehen sein. Beispielsweise erfasst dabei einer der Sensoren 3 den Längsmesswert X und der oder die anderen Sensoren 3 erfassen jeweils einen Quermesswert Y, Z. Somit kann beispielsweise ein mehrachsiger Sensor (z.B. mehrachsiger Beschleunigungssensor), durch zumindest zwei einachsige Sensoren (z.B. zwei einachsige Beschleunigungssensoren) substituiert werden. Es sind aber auch Mischformen aus einachsigen und mehrachsigen Sensoren als Anzahl an Sensoren 3 denkbar.

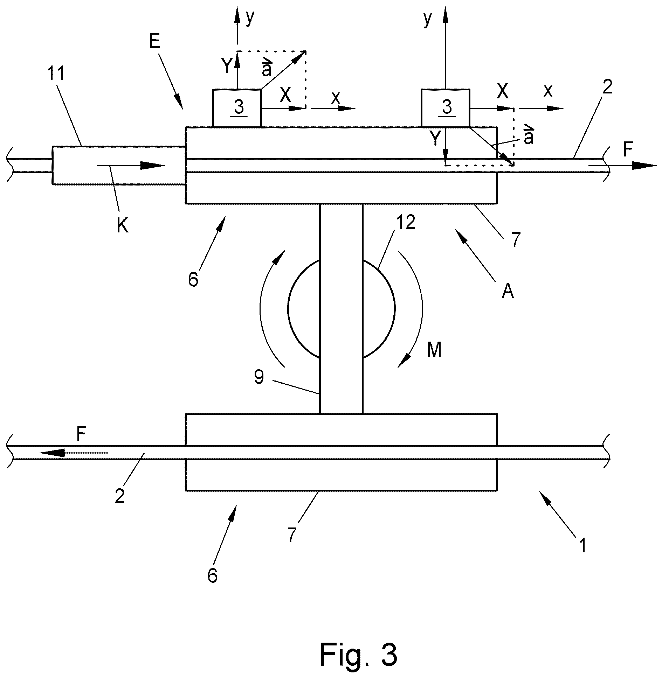

Zudem ist es auch denkbar, dass bei einer Mehrzahl an Sensoren 3 an der zumindest einen Seilbahnstütze 1 die einzelnen Sensoren 3 jeweils Längsmesswert X und Quermesswert Y, Z in dieselben Messrichtungen x, y, z erfassen. Lediglich beispielhaft sind in Fig. 3 als die Anzahl an Sensoren 3 zwei zweiachsige Sensoren vorgesehen, welche beide den Längsmesswert X und den Quermesswert Y in dieselben Messrichtungen x, y erfassen. Für die erfindungsgemäße Auswertung wird zumindest von einem der beiden Sensoren 3 der erfasste Längsmesswert X und Quermesswert Y herangezogen, alternativ von beiden Sensoren 3. Wie bereits erwähnt, ist für die Erfindung entscheidend, dass ein Längsmesswert X und zumindest ein Quermesswert Y, Z mit der Anzahl an Sensoren 3 erfasst wird. Wie nachfolgend genauer beschrieben wird, soll die beispielhafte Ausführungsform der Anzahl an Sensoren 3 in Fig. 3 u.a. veranschaulichen, wie sich die Bewegung der Seilbahnstütze 1 auf die Vorzeichen des erfassten Längs- und Quermesswerts auswirkt.

Die Anzahl an Sensoren 3 kann grundsätzlich an einer beliebigen Stelle der Seilbahnstütze 1 angeordnet sein. Wie in Fig. 3 bespielhaft dargestellt, ist an der Seilbahnstütze 1 vorzugsweise jeweils ein mehrachsiger Sensor 3 im Einfahrtsbereich E und im Ausfahrtsbereich A der Rollenbatterie 6 an dem Längsträger 7 angeordnet. Der oder die Sensoren 3 können aber auch an einer anderen Stelle der Seilbahnstütze 1 angeordnet sein, z.B. an der Stütze 12 der Seilbahnstütze 1 selbst oder an einem Querträger 9 der Seilbahnstütze 1. Wichtig ist für die Stelle des oder der Sensoren 3 an der Seilbahnstütze 1, dass die erfindungsgemäßen Messwerte erfasst werden können, wie nachfolgend beschrieben.

In den Fig. 2 und 3 ist die Anzahl an Sensoren 3 nur an einer Seilbahnstütze 1 der Seilbahn 20 dargestellt, wobei natürlich auch an mehreren Seilbahnstützen 1 der Seilbahn 20 jeweils eine Anzahl an Sensoren 3 vorgesehen sein kann. Vorzugsweise ist an jeder Seilbahnstütze 1 der Seilbahn 20 eine Anzahl an Sensoren 3 vorgesehen. Bevorzugt ist die Ausführungsform der Anzahl an Sensoren 3 an jeder Seilbahnstütze 1 ident (z.B. selbe Anzahl und/oder Art der Sensoren 3).

Die Anordnung der Anzahl an Sensoren 3 an der Seilbahnstütze 1 beeinflusst die Orientierung der Messrichtungen der Anzahl der Sensoren 3 bezogen auf die Förderrichtung F und die Querrichtung.

Je nach Anordnung der Anzahl an Sensoren 3 an der Seilbahnstütze 1 und Orientierung der Messrichtungen x, y, z kann es sein, dass die Längsmessrichtung x nicht exakt mit der Förderrichtung F übereinstimmt und die zumindest eine Quermessrichtung (z.B. die erste Quermessrichtung y und/oder falls vorhanden die zweite Quermessrichtung z) nicht exakt mit der Querrichtung übereinstimmt, was in der Praxis der wahrscheinlichere Fall ist. "Entlang der Förderrichtung F" den Längsmesswert X zu erfassen bedeutet in diesem Zusammenhang, dass die Längsmessrichtung x der Anzahl an Sensoren 3 so zur Förderrichtung F orientiert ist, dass der erfasste Längsmesswert X in die Längsmessrichtung x der Anzahl an Sensoren 3 zumindest einen Längsanteil in die Förderrichtung F aufweist. "Quer zur Förderrichtung F" den Quermesswert Y, Z zu erfassen bedeutet in diesem Zusammenhang, dass die Quermessrichtung y, z der Anzahl an Sensoren 3 so zur Querrichtung orientiert ist, dass der erfasste Quermesswert Y, Z in die Quermessrichtung y, z der Anzahl an Sensoren 3 zumindest einen Queranteil in die Querrichtung aufweist.

Natürlich kann je nach Anordnung der Anzahl an Sensoren 3 an der Seilbahnstütze 1 und Orientierung der Messrichtungen x, y, z der Längsmesswert X auch einen Queranteil in Querrichtung aufweisen und der oder die Quermesswerte Y, Z können auch einen Längsanteil in die Förderrichtung F aufweisen.

Eine Bewegung der Seilbahnstütze 1 kann beispielsweise eine Verdrehung und/oder Neigung der Seilbahnstütze 1 sein, wie im Folgenden noch näher beschrieben wird. Die Größe des entlang der Längsmessrichtung x erfassten Längsmesswerts X und die Größe des entlang einer Quermessrichtung y, z erfassten Quermesswerts Y, Z hängen, neben der Anordnung der Anzahl an Sensoren 3 an der Seilbahnstütze 1 und der Orientierung der Messrichtungen x, y, z der Anzahl an Sensoren 3, insbesondere von den auftretenden Bewegungen der Seilbahnstütze 1 im Betrieb und/oder im Stillstand der Seilbahn 20 ab. Je nachdem wie stark und in welche Richtung (entlang und/oder quer zur Förderrichtung F) sich die Seilbahnstütze 1 bewegt, ändert sich die Größe des jeweiligen erfassten Messwerts X, Y, Z und folglich auch die Größen der Längs- und Queranteile. Die auftretenden Bewegungen der Seilbahnstütze 1 sind insbesondere vom Betrieb der Seilbahn 20, z.B. von der Fördergeschwindigkeit der Seilbahnfahrzeuge 10, ob ein problematisches Ereignis auftritt, usw., und/oder von der Ausführungsform der Seilbahn 20 abhängig.

Für die Erfindung ist entscheidend, dass die Anzahl an Sensoren 3 so an der Seilbahnstütze 1 angeordnet ist und die Messrichtungen x, y, z so orientiert sind, dass unter den erwartbaren auftretenden Bewegungen der Seilbahnstütze 1 im Betrieb und/oder im Stillstand der Seilbahn 20 der Längsmesswert X und der oder die Quermesswerte Y, Z noch ausreichend erfasst werden, um für das erfindungsgemäße Verfahren ausgewertet werden zu können. Die Untergrenze des erfassten Längsmesswerts X und des jeweiligen erfassten Quermesswerts Y, Z definiert sich aus dem Messbereich und der Messgenauigkeit der Anzahl an Sensoren 3.

Vorzugsweise ist die Längsmessrichtung x der Anzahl an Sensoren 3 so orientiert, dass der Längsanteil des Längsmesswerts X größer ist als der Queranteil des Längsmesswerts X und/oder, dass die jeweilige Quermessrichtung y, z der Anzahl an Sensoren 3 so orientiert ist, dass der Längsanteil des Quermesswerts Y, Z kleiner ist als der Queranteil des Quermesswerts Y, Z. Besonders bevorzugt sind die Messrichtungen x, y, z der Anzahl an Sensoren 3 so orientiert, dass im Wesentlichen die Längsmessrichtung x mit der Förderrichtung F übereinstimmt und die jeweilige Quermessrichtung y, z normal auf die Förderrichtung F steht. In diesem Fall weist der Längsmesswert X nur den Längsanteil auf und der Quermesswert Y, Z weist nur den Queranteil auf. Besonders bevorzugt ist die Anzahl an Sensoren 3 so ausgestaltet, dass die Messrichtungen x, y, z normal aufeinander stehen, wie in Fig. 2 beispielhaft angedeutet.

In Bezug auf den Längsmesswert X und den oder die Quermesswerte Y, Z ist der Einfluss des Vorzeichens zu beachten. Je nach auftretender Bewegung der Seilbahnstütze 1 kann sich das Vorzeichen des erfassten Messwerts X, Y, Z entlang der jeweiligen Messrichtung x, y, z ändern. Vorzugsweise wird ein Absolutwert des Längsmesswerts X und ein Absolutwert des jeweiligen Quermesswerts Y bestimmt, wie nachfolgend noch näher beschrieben wird.

Als Messwert X, Y, Z kann beispielsweise je nach verwendeter Art der Anzahl an Sensoren 3 und Messprinzip eine Auslenkung, eine Geschwindigkeit oder eine Beschleunigung in die Messrichtungen x, y, z der Anzahl an Sensoren 3 erfasst werden. Alternativ kann als der Längsmesswert X oder der oder die Quermesswerte Y, Z auch ein Winkel, eine Winkelgeschwindigkeit oder eine Winkelbeschleunigung um die Messrichtungen x, y, z der Anzahl an Sensoren 3 erfasst werden. Im Falle, dass beispielsweise eine Winkelbeschleunigung gemessen wird, kann diese zusätzlich in bekannter Weise in eine lineare Beschleunigung (z.B. als Tangentialbeschleunigung) in die jeweilige Messrichtung x, y, z der Anzahl an Sensoren 3 umgerechnet werden, um so den Längsmesswert X und den oder die Quermesswerte Y, Z zu bestimmen. Das Gleiche gilt natürlich auch für den Winkel und für die Winkelgeschwindigkeit.

Als Anzahl an Sensoren 3 wird vorzugsweise ein mehrachsiger Sensor, insbesondere ein mehrachsiger Beschleunigungssensor, verwendet. Beispielsweise kann ein kapazitiver oder piezoelektrischer Beschleunigungssensor verwendet werden. Der mehrachsige Beschleunigungssensor misst als Längsmesswert X eine Beschleunigung entlang der Förderrichtung F und als zumindest einen Quermesswert Y, Z eine Beschleunigung quer zur Förderrichtung F. Wie bereits erwähnt, kann der mehrachsige Beschleunigungssensor auch zwei Quermesswerte Y, Z erfassen. Es können alternativ auch zumindest zwei Sensoren als die Anzahl an Sensoren 3 vorgesehen sein, wobei z.B. einer der Sensoren den Längsmesswert X erfasst und ein anderer der Sensoren den oder die Quermesswerte Y, Z erfasst. Somit kann beispielsweise ein mehrachsiger Beschleunigungssensor durch zumindest zwei separate einachsige Beschleunigungssensoren substituiert werden. Es kann auch ein Gyroskop vorgesehen sein, welches eine Drehbewegung der Seilbahnstütze 1 (z.B. Winkelgeschwindigkeit) erfasst, um den Längsmesswert X und den oder die Quermesswerte Y, Z zu bestimmen.

In Fig. 3 ist die Seilbahnstütze 1 in einer Draufsicht dargestellt. Die Seilbahnstütze 1 weist zwei Rollenbatterien 6 auf, wobei das Förderseil 2 auf der jeweiligen Rollenbatterie 6 in entgegengesetzter Förderrichtung F bewegt wird (im Falle der Umlaufseilbahn). Weiters ist ein problematisches Ereignis dargestellt, wobei sich die Seilklemme 11 des Seilbahnfahrzeugs 10 im Einfahrtsbereich E einer der zwei Rollenbatterien 6 der Seilbahnstütze 1 verhakt und dadurch das Seilbahnfahrzeug 10 blockiert. Durch das blockierte Seilbahnfahrzeug 10 wirkt über die Seilklemme 11 auf die Rollenbatterie 10 eine Kraft K, im Wesentlichen in Förderrichtung F. Aus der Kraft K entsteht an der Seilbahnstütze 1 eine Reaktionskraft, wodurch sich die Seilbahnstütze 1, insbesondere der obere Teil der Seilbahnstütze 1 umfassend die Rollenbatterien 6 und den Querträger 9, bewegt bzw. verdreht (es entsteht ein Moment M). Durch die Verdrehung kommt es zur Torsion der Seilbahnstütze 1. Die Verdrehung der Seilbahnstütze 1 ist in Fig. 3 als horizontale Verdrehung mittels Pfeile angedeutet dargestellt. In der Realität kann die Verdrehung der Seilbahnstütze 1 als Bewegung der Seilbahnstütze 1 zusätzlich mit einer Neigung der Seilbahnstütze 1 um zumindest eine weitere Achse der Seilbahnstütze 1 überlagert werden.

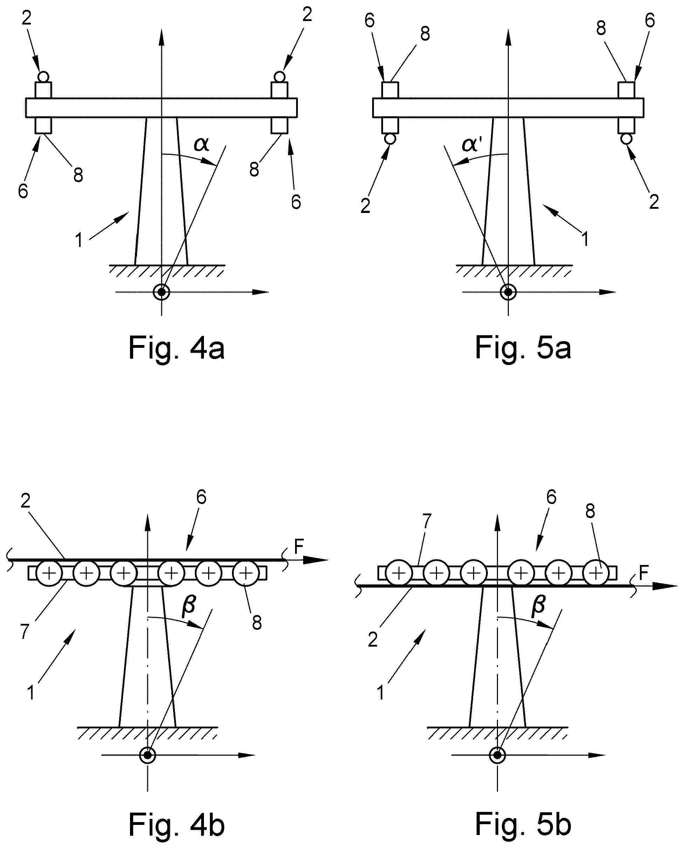

In Fig. 4a und 5a ist jeweils schematisch zur Erklärung eine Neigung der Seilbahnstütze 1 quer zur Förderrichtung F dargestellt. Dabei hängt die Richtung der Neigung insbesondere von der Kraftrichtung der angreifenden Kraft K (z.B. aus der Seilklemme 11) und der Art der Seilbahnstütze 1 ab. Bei gleicher Kraftrichtung der Kraft K in die Förderrichtung F, wie in Fig. 3 dargestellt, neigt sich die Seilbahnstütze 1 als Trägerstütze (Fig. 4a) um den Winkel α. Mit derselben Kraftrichtung in die Förderrichtung F neigt sich im Vergleich dazu die Seilbahnstütze 1 als Niederhalterstütze um den Winkel α` in die entgegengesetzte Richtung (Fig. 5a). Diese unterschiedliche Neigungsrichtung hat insbesondere Einfluss auf das Vorzeichen des erfassten Messwerts X, Y, Z entlang der jeweiligen Messrichtung x, y, z der Anzahl an Sensoren 3 und kann in der Auswertung entsprechend berücksichtigt werden.

Zudem kann es zu einer weiteren Neigung der Seilbahnstütze 1 entlang der Förderrichtung F kommen, welche in Fig. 4b (Trägerstütze) und 5b (Niederhalterstütze) mit einem Winkel β lediglich beispielhaft zur Erklärung angedeutet ist. Die Neigungsrichtung ist in diesem Fall abhängig von der Kraftrichtung der Kraft K (in Förderrichtung F) aus der blockierten Seilklemme 11 und unabhängig von der Art der Seilbahnstütze 1.

Das Blockieren des Seilbahnfahrzeugs 10 an der Seilbahnstütze 1 tritt üblicherweise schlagartig auf, wobei sich die Seilbahnstütze 1 wie beschrieben bewegt und beschleunigt wird, wobei der Anzahl an Sensoren 3 in zumindest zwei Messrichtung erhöhte Messwerte misst. Im Falle des mehrachsigen Beschleunigungssensors als Anzahl an Sensoren 3 werden Beschleunigungen, wie in Fig. 3 angedeutet, entlang der Längsmessrichtung x als der Längsmesswert X und entlang der Quermessrichtung y als der Quermesswert Y erfasst. In Fig. 3 sind übersichtshalber nur an einer der beiden Rollenbatterien 6 die Sensoren 3 schematisch dargestellt. Dabei ist die bereits beschriebene bevorzugte Orientierung der beiden Messrichtungen x, y der Anzahl an Sensoren 3 dargestellt, wobei die Längsmessrichtung x, entlang welcher der Längsmesswert X erfasst wird, mit der Förderrichtung F übereinstimmt und die Quermessrichtung y, entlang welcher der Quermesswert Y erfasst wird, normal auf die Förderrichtung F steht, also mit der Querrichtung übereinstimmt.

Die Beschleunigung der Sensoren 3 an der Seilbahnstütze 1 ist in Fig. 3 mit den Vektoren a lediglich schematisch dargestellt. Je nachdem wie sich die Seilbahnstütze 1 bewegt, kann sich die Orientierung des jeweiligen Vektors a in Bezug auf die beiden Messrichtungen x, y des jeweiligen Sensors 3 ändern, wodurch sich wie bereits beschrieben, das Vorzeichen des Längsmesswerts X und des Quermesswerts Y dementsprechend ändern kann. In Fig. 3 sind durch die horizontale Verdrehung der Seilbahnstütze 1 die beiden Vektoren a unterschiedlich orientiert, wodurch an dem Sensor 3 im Einfahrtsbereich E der Quermesswert Y mit positivem Vorzeichen erfasst wird und an dem Sensor 3 im Ausfahrtsbereich A der Quermesswert Y mit negativem Vorzeichen erfasst wird.

Im normalen Betrieb der Seilbahn 20, also wenn kein problematisches Ereignis wie beschrieben auftritt, kann es aufgrund des Betriebs zur Bewegung der Seilbahnstütze 1, z.B. zu dynamischen Beschleunigungen der Seilbahnstütze 1 kommen, wenn z.B. eines der Seilbahnfahrzeuge 10 entlang der Rollenbatterie 6 der Seilbahnstütze 1 geführt wird. Aus Versuchen hat sich gezeigt, dass sich dabei die Seilbahnstütze 1 im Wesentlichen nur in eine Messrichtung der Anzahl an Sensoren 3 bewegt und dadurch nur in eine Messrichtung ein wesentlicher Messwert erfasst wird (z.B. erhöhte Beschleunigung als Längsmesswert X entlang der Längsmessrichtung x). Wie bereits erwähnt, wurde jedoch erkannt, dass es bei problematischen Ereignissen, wie z.B. beim Blockieren des Seilbahnfahrzeugs 10 an der Seilbahnstütze 1, im Vergleich zum normalen Betrieb zu erhöhten Messwerten in mehr als eine Messrichtung kommt, beispielsweise wird eine erhöhte Beschleunigung als Längsmesswert X entlang der Längsmessrichtung x der Anzahl an Sensoren 3 und als Quermesswert Y, Z entlang zumindest einer Quermessrichtung y, z der Anzahl an Sensoren 3 erfasst.

Aber auch von den Seilbahnfahrzeugen 10 bzw. von der Seilbahn 20 unabhängige (äußere) problematische Ereignisse können eine Bewegung der Seilbahnstütze 1 auslösen, z.B. durch den Fall eines Astes oder eines Baums auf das Förderseil 2 im Bereich einer der Seilbahnstütze 1, zwischen zwei Seilbahnstützen 1 oder zwischen einer Seilbahnstütze 1 und einer Seilbahnstation 21. Dabei erfasst die Anzahl an Sensoren 3 an einer der Seilbahnstützen 1, welche sich in der Nähe des Ereignisses befindet, ebenfalls erhöhte Messwerte entlang mehr als einer Messrichtung x, y, z. Beispielsweise im Vergleich zum normalen Betrieb oder Stillstand der Seilbahn 20, erfasst die Anzahl an Sensoren 3 eine erhöhte Beschleunigung als Längsmesswert X entlang der Längsmessrichtung x und als Quermesswert Y, Z entlang zumindest einer Quermessrichtung y, z.

Das Auftreten eines erhöhten Messwerts, insbesondere einer schlagartigen Beschleunigung, in mehr als eine Messrichtung der Anzahl an Sensoren 3 sind ein Indiz dafür, dass es zu einem Problem an der Seilbahn 20 gekommen ist. Zu beachten ist, dass es im Betrieb und im Stillstand der Seilbahn 20 zu unterschiedlichen Beschleunigungen an der Seilbahnstütze 1 kommt. Üblicherweise treten im Stillstand im Wesentlichen nur durch Seilschwingungen des Förderseils 2 und/oder durch Wind induzierte Beschleunigungen an der Seilbahnstütze 1 auf.

Erfindungsgemäß wird mit der Anzahl an Sensoren 3 während des Betriebs oder im Stillstand der Seilbahn 20 in zumindest einem Zeitpunkt t gleichzeitig der Längsmesswert X und der Quermesswerte Y, Z erfasst. Vorzugsweise wird mit der Anzahl an Sensoren 3 eine Mehrzahl an Quermesswerten Y, Z erfasst, wobei zumindest zwei der Mehrzahl an Quermesswerten Y, Z in jeweils unterschiedliche Quermessrichtungen y, z erfasst werden. Besonders bevorzugt werden mit der Anzahl an Sensoren 3 gleichzeitig der Längsmesswert X und der oder die Quermesswerte Y, Z in mehreren Zeitpunkten t während des Betriebs der Seilbahn 20, insbesondere während der Durchfahrt des Seilbahnfahrzeugs 10 entlang der Seilbahnstütze 1, oder im Stillstand der Seilbahn 20 erfasst. Die Zeitpunkte t können durch ein vorgegebenes Zeitintervall voneinander zeitlich beanstandet sein. Die Länge des vorgegebenen Zeitintervalls kann beispielsweise abhängig von der Fördergeschwindigkeit der Seilbahnfahrzeuge 10 gewählt werden. Je höher die Fördergeschwindigkeit ist, desto kürzer können die Zeitintervalle gewählt werden, um problematische Ereignisse zuverlässig zu erkennen. Beispielsweise liegt die Länge des vorgegebenen Zeitintervalls im Bereich zwischen 10ms und 500ms.

"In zumindest einem Zeitpunkt t gleichzeitig" bedeutet in diesem Zusammenhang, dass zumindest in einen selben Zeitpunkt t im Betrieb oder im Stillstand der Seilbahn 20 mit der Anzahl an Sensoren 3 der Längsmesswert X und der oder die Quermesswerte Y, Z erfasst werden. Vorzugsweise werden mit der Anzahl an Sensoren 3 der Längsmesswert X und der oder die Quermesswerte Y, Z kontinuierlich im Betrieb und im Stillstand der Seilbahn 20 erfasst. Da insbesondere bei der Verwendung von mehr als einem Sensor 3 Laufzeiten einen Einfluss auf die Messung haben können und in der Realität nicht exakt zeitgleich gemessen werden kann, ist unter dem selben Zeitpunkt t im Wesentlichen ein Zeitabschnitt von wenigen Mikro- bis Millisekunden zu verstehen, in dem die Messwerte (gleichzeitig) erfasst werden.

Eine Auswerteeinheit 4 der Seilbahn 20 ist vorgesehen, welche eingerichtet ist, den im zumindest einen Zeitpunkt t gleichzeitig erfassten Längsmesswert X und Quermesswert Y, Z von der Anzahl an Sensoren 3 zu empfangen. Dazu ist die Auswerteeinheit 4 beispielsweise über eine geeignete drahtgebunden oder drahtlose Verbindung mit der Anzahl an Sensoren 3 verbunden. Die Auswerteeinheit 4 kann Teil einer Steuereinheit 5 der Seilbahn 20 oder als separate Einheit ausgeführt sein. Die Auswerteeinheit 4 und/oder die Steuereinheit 5 ist vorzugsweise eine mikroprozessorbasierte Hardware, beispielsweise ein Mikrokontroller oder Computer.

Die Auswerteeinheit 4 ist weiters eingerichtet, den erfassten und empfangenen Längsmesswert X und Quermesswert Y, Z zu verarbeiten, wobei eine definierte mathematische Verknüpfung zwischen dem im zumindest einen Zeitpunkt t gleichzeitig erfassten Längsmesswert X und Quermesswert Y, Z hergestellt wird und ein Ergebnis aus der definierten mathematischen Verknüpfung ermittelt wird. Im Falle, dass der Längsmesswert X und eine Mehrzahl an Quermesswerten Y, Z im zumindest einen Zeitpunkt t gleichzeitig mit der Anzahl an Sensoren 3 erfasst werden, ist die Auswerteeinheit 4 eingerichtet, diese zu empfangen und die definierte mathematische Verknüpfung zwischen dem im zumindest einen Zeitpunkt t gleichzeitig erfassten Längsmesswert X und der Mehrzahl an Quermesswerten Y, Z herzustellen und ein Ergebnis aus der definierten mathematischen Verknüpfung zu ermitteln. Als mathematische Verknüpfung wird vorzugsweise eine Addition, Multiplikation oder Korrelation definiert. In der Auswerteeinheit 4 kann ein geeigneter Algorithmus hinterlegt sein, welcher dazu ausgebildet ist, die definierte mathematische Verknüpfung zwischen dem Längsmesswert X und dem oder den Quermesswerten Y, Z herzustellen.

Die Auswerteeinheit 4 kann auch bestimmte Vorverarbeitungen an den erfassten Messwerten X, Y, Z durchführen, beispielsweise filtern, verstärken oder in einer anderen bekannten Weise die Messwerte X, Y, Z manipulieren. Die Auswerteeinheit 4 kann zusätzlich den im zumindest einen Zeitpunkt t gleichzeitig erfassten Längsmesswert X und Quermesswert Y, Z auch verarbeiten, indem beispielsweise ein Absolutwert des Längsmesswerts X und ein Absolutwert des Quermesswerts Y, Z bestimmt wird, um daraus die definierte mathematische Verknüpfung herzustellen und das Ergebnis aus der definierten mathematischen Verknüpfung zu ermitteln. Gleiches gilt auch bei einer Mehrzahl an Quermesswerten Y, Z. Dadurch kann ein Einfluss aus dem Vorzeichen des erfassten Messwerts X, Y, Z entlang der jeweiligen Messrichtung x, y, z der Anzahl an Sensoren 3 vermieden werden.

Das ermittelte Ergebnis wird anschließend mit einer vorgegebenen Bedingung verglichen und es wird geprüft, ob das ermittelte Ergebnis die vorgegebene Bedingung erfüllt. Das kann das Prüfen auf Überschreiten oder Unterschreiten eines vorgegebenen Grenzwertes als vorgegebene Bedingung umfassen. Der in der Auswerteeinheit 4 hinterlegte Algorithmus kann zusätzlich dazu ausgebildet sein, diesen Vergleich durchzuführen. Die vorgegebene Bedingung ist in der Auswerteeinheit 4 hinterlegt. Die Verarbeitung und Auswertung der Messwerte X, Y, Z von der Auswerteeinheit 4 findet vorzugsweise in Echtzeit statt.

Als Bedingung wird vorzugsweise ein Überschreiten eines definierten Maximalwerts durch das ermittelte Ergebnis aus der mathematischen Verknüpfung vorgegeben. Die vorgegebene Bedingung, insbesondere der Maximalwert, kann abhängig vom Betrieb der Seilbahn 20, z.B. von der Fördergeschwindigkeit der Seilbahnfahrzeuge 10 am Förderseil 2 in die Förderrichtung F, definiert werden. Das bedeutet, dass beispielsweise der Maximalwert als vorgegebene Bedingung fest vorgegeben werden kann oder dynamisch an die Fördergeschwindigkeit angepasst werden kann. Zusätzlich oder alternativ kann die vorgegebene Bedingung auch abhängig je nach Ausführungsform der Seilbahn 20 definiert werden. Dabei werden Merkmale der Ausführungsform der Seilbahn 20, welche Einfluss auf die vorgegebene Bedingung haben können, z.B. Art und Anzahl der Seilbahnstützen 1, Art und Anzahl der Seilbahnfahrzeuge 10, Topologie des Geländes an dem die Seilbahnbahn 20 betrieben wird, etc., berücksichtigt. Die vorgegebene Bedingung kann beispielsweise aus Erfahrungswerten definiert werden und/oder mittels Kalibrierung bestimmt werden, wie im Folgenden näher beschrieben wird.

Wenn durch das ermittelte Ergebnis die vorgegebene Bedingung erfüllt wird, signalisiert die Auswerteeinheit 4 ein Problem mit der Seilbahn 20 an die Steuereinheit 5 der Seilbahn 20. Die Auswerteeinheit 4 ist beispielsweise über eine geeignete drahtgebunden oder drahtlose Verbindung mit der Steuereinheit 5 verbunden. Beispielsweise sendet die Auswerteeinheit 4 zum Signalisieren des Problems mit der Seilbahn 20 ein vordefiniertes Signal, vorzugsweise ein elektrisches oder elektromagnetisches Signal, an die Steuereinheit 5. Die konkrete Ausgestaltung des vordefinierten Signals liegt im Können einer Durchschnittsfachperson.

Abhängig vom dem durch die Auswerteeinheit 4 signalisierten Problem steuert die Steuereinheit 5 anschließend die Seilbahn 20. Die Steuereinheit 5 steuert beispielsweise einen Seilbahnantrieb der Seilbahn 20 (nicht dargestellt), mit dem beispielsweise das Förderseil 2 bewegt wird, oder eine andere Komponente der Seilbahn 20, mit der auf den Betrieb der Seilbahn 20 Einfluss genommen werden kann, an. Beispielsweise wird der Seilbahnantrieb der Seilbahn 20 gestoppt oder die Fördergeschwindigkeit der Seilbahnfahrzeuge 10 wird durch den Seilbahnantrieb reduziert. Alternativ oder zusätzlich kann die Steuereinheit 5 die Seilbahn 20 steuern, indem die Steuereinheit 5 eine Anzeigeeinheit (nicht dargestellt) ansteuert. Die Anzeigeeinheit ist dazu ausgebildet, einem Seilbahnpersonal das Problem mit der Seilbahn 20 akustisch und/oder visuell anzuzeigen. Als Anzeigeeinheit kann beispielsweise ein Bildschirm mit einem Lautsprecher in einem Bedienraum der Seilbahn 20 vorgesehen sein, z.B. in einer Seilbahnstation 21. Im Falle, dass im Stillstand der Seilbahn 20 ein Problem mit der Seilbahn 20 erkannt wird, kann die Steuereinheit 5 die Seilbahn 20 steuern, indem beispielweise eine Inbetriebnahme der Seilbahn 20 unterbunden wird. Alternativ oder zusätzlich kann die Steuereinheit 5, wie auch im Betrieb der Seilbahn 20, das Problem mit der Seilbahn 20 mittels der Anzeigeeinheit dem Seilbahnpersonal mitteilen.

Da es insbesondere während der Durchfahrt des Seilbahnfahrzeugs 10 entlang der Seilbahnstütze 1 zu einem Problem mit der Seilbahn 20 kommen kann, wird vorzugsweise in diesem Zeitraum mit der Anzahl an Sensoren 3 in zumindest einem Zeitpunkt t gleichzeitig der Längsmesswert X und der oder die Quermesswerte Y, Z erfasst. Um festzustellen, wann das Seilbahnfahrzeug 10 entlang der Seilbahnstütze 1 durchfährt, können beispielswiese weitere Sensoren (nicht dargestellt), z.B. induktive Sensoren, an der Seilbahnstütze 1 vorgesehen sein, welche eingerichtet sind, das Seilbahnfahrzeug 10, z.B. die Seilklemme 11 des Seilbahnfahrzeugs 10, während der Durchfahrt zu erfassen. Wenn durch das daraus ermittelte Ergebnis die vorgegebene Bedingung erfüllt wird, signalisiert die Auswerteeinheit 4 für eine Durchfahrtsüberwachung ein Problem in der Durchfahrt des Seilbahnfahrzeugs 10 an der Seilbahnstütze 1 an die Steuereinheit 5 der Seilbahn 20, woraufhin die Steuereinheit 5 die Seilbahn 20 abhängig vom dem durch die Auswerteeinheit 4 signalisierten Problem steuert. Beispielsweise kann auch in diesem Fall der Seilbahnantrieb der Seilbahn 20 gestoppt oder die Fördergeschwindigkeit der Seilbahnfahrzeuge 10 reduziert werden.

Die vorgegebenen Bedingungen können für die Seilbahn 20 vordefiniert sein. Um die vorgegebene Bedingung zu definieren, kann aber vorzugsweise auch eine Kalibrierung der erfindungsgemäßen Überwachung der Seilbahn 20 und der Anzahl an Sensoren 3 durchgeführt werden. Dabei wird die Seilbahn 20 beispielsweise mit unterschiedlichen Fördergeschwindigkeiten der Seilbahnfahrzeuge 10 am Förderseil 2 betrieben, z.B. mit maximaler Fördergeschwindigkeit und mit der Hälfte der maximalen Fördergeschwindigkeit und bedarfsweise auch mit weiteren Fördergeschwindigkeiten. Damit können die im normalen Betrieb auftretenden Bewegungen der Seilbahnstütze 1 (in Form des Längsmesswertes X und des oder der Quermesswerte Y, Z) mit der Anzahl an Sensoren 3 erfasst werden. Zwischen dem Längsmesswert X und dem oder den Quermesswerte Y, Z, welche während der Kalibrierung in zumindest einem Zeitpunkt t gleichzeitig mit der Anzahl an Sensoren 3 erfasst werden, wird eine definierte mathematische Verknüpfung (die auch im Realbetrieb verwendet wird) hergestellt. Das aus der definierten mathematischen Verknüpfung ermittelt Ergebnis dient anschließend als Richtwert für die Definition der vorgegebenen Bedingung. Beispielsweise wird der als vorgegebene Bedingung definierten Grenz- oder Maximalwert um ein Vielfaches von dem ermittelten Ergebnis gewählt. Dem liegt der Gedanke zugrunde, dass im Fehlerfall (auftreten eines problematischen Ereignisses) der Längsmesswert X und der oder die Quermesswerte Y, Z deutlich vom Normalbetrieb abweichen werden. Vorzugsweise beträgt der definierte Maximalwert das Dreifache bis Fünffache des Richtwertes. Damit soll sichergestellt werden, dass während des normalen Betriebs der Seilbahn 20, also ohne problematisches Ereignis, der definierte Maximalwert durch das ermittelte Ergebnis aus Längs- und Quermesswert(en) nicht überschritten wird. Aber auch bei Stillstand der Seilbahn 20 können vergleichbare Messungen mit der Anzahl an Sensoren 3 für die Kalibrierung und zur Definition der vorgegebenen Bedingung durchgeführt werden.

## Patentansprüche

1. Verfahren zur Überwachung einer Seilbahn (20), wobei im Betrieb der Seilbahn (20) eine Anzahl an Seilbahnfahrzeugen (10) an einem Förderseil (2) in eine Förderrichtung (F) entlang einer Anzahl an Seilbahnstützen (1) bewegt wird, wobei eine Anzahl an Sensoren (3) an zumindest einer der Seilbahnstützen (1) vorgesehen ist und mit der Anzahl an Sensoren (3) eine Bewegung der Seilbahnstütze (1) entlang der Förderrichtung (F) als ein Längsmesswert (X) erfasst wird und zumindest eine Bewegung der Seilbahnstütze (1) quer zur Förderrichtung (F) als ein Quermesswert (Y, Z) entlang einer Quermessrichtung (y, z) erfasst wird, **dadurch gekennzeichnet, dass** mit der Anzahl an Sensoren (3) während des Betriebs oder im Stillstand der Seilbahn (20) in zumindest einem Zeitpunkt (t) gleichzeitig Längsmesswert (X) und Quermesswert (Y, Z) erfasst werden, wobei eine Auswerteeinheit (4) der Seilbahn (20) den im zumindest einen Zeitpunkt (t) gleichzeitig erfassten Längsmesswert (X) und Quermesswert (Y, Z) von der Anzahl an Sensoren (3) empfängt und verarbeitet, wobei in der Auswerteeinheit (4) eine definierte mathematische Verknüpfung zwischen dem im zumindest einen Zeitpunkt (t) gleichzeitig erfassten Längsmesswert (X) und Quermesswert (Y, Z) hergestellt wird und ein Ergebnis aus der definierten mathematischen Verknüpfung ermittelt wird, wobei wenn durch das ermittelte Ergebnis eine vorgegebene Bedingung erfüllt wird, die Auswerteeinheit (4) ein Problem an der Seilbahn (20) an eine Steuereinheit (5) der Seilbahn (20) für die Überwachung signalisiert und die Steuereinheit (5) die Seilbahn (20) abhängig von dem durch die Auswerteeinheit (4) signalisierten Problem steuert.

2. Verfahren nach Anspruch 1, **dadurch gekennzeichnet, dass** mit der Anzahl an Sensoren (3) eine Mehrzahl an Quermesswerten (Y, Z), vorzugsweise zwei Quermesswerte, erfasst wird, wobei zumindest zwei der Mehrzahl an Quermesswerten (Y, Z) in unterschiedliche Quermessrichtungen (y, z) erfasst werden.

3. Verfahren nach Anspruch 1 oder 2, **dadurch gekennzeichnet, dass** im Betrieb der Seilbahn (20) mit der Anzahl an Sensoren (3) an der zumindest einen Seilbahnstütze (1) während einer Durchfahrt eines der Seilbahnfahrzeuge (10) entlang der Seilbahnstütze (1) in zumindest einem Zeitpunkt (t) gleichzeitig Längsmesswert (X) und Quermesswert (Y, Z) erfasst werden **und dass** wenn durch das daraus ermittelte Ergebnis die vorgegebene Bedingung erfüllt wird, die Auswerteeinheit (4) ein Problem in der Durchfahrt des Seilbahnfahrzeugs (10) an der Seilbahnstütze (1) an die Steuereinheit (5) der Seilbahn (20) für eine Durchfahrtsüberwachung signalisiert und die Steuereinheit (5) die Seilbahn (20) abhängig von dem durch die Auswerteeinheit (4) signalisierten Problem steuert.

4. Verfahren nach einem der Ansprüche 1 bis 3, **dadurch gekennzeichnet, dass** mit der Anzahl an Sensoren (3) als Längsmesswert (X) und als Quermesswert (Y, Z) jeweils eine Beschleunigung erfasst wird.

5. Verfahren nach einem der Ansprüche 1 bis 4, **dadurch gekennzeichnet, dass** mit der Anzahl an Sensoren (3) gleichzeitig Längsmesswert (X) und Quermesswert (Y, Z) in mehreren Zeitpunkten (t) während des Betriebs der Seilbahn (20), vorzugsweise während der Durchfahrt eines der Seilbahnfahrzeuge (10) entlang der Seilbahnstütze (1), oder im Stillstand der Seilbahn (20) erfasst werden.

6. Verfahren nach einem der Ansprüche 1 bis 5, **dadurch gekennzeichnet, dass** als mathematische Verknüpfung eine Addition, Multiplikation oder Korrelation definiert wird.

7. Verfahren nach einem der Ansprüche 1 bis 6, **dadurch gekennzeichnet, dass** als Bedingung ein Überschreiten eines definierten Maximalwerts durch das ermittelte Ergebnis aus der mathematischen Verknüpfung vorgegeben wird.

8. Verfahren nach Anspruch 7, **dadurch gekennzeichnet, dass** der Maximalwert vom Betrieb der Seilbahn (20), vorzugsweise von einer Fördergeschwindigkeit der Seilbahnfahrzeuge (10) am Förderseil (2), und/oder von der Ausführungsform der Seilbahn (20) abhängig definiert wird.

9. Verfahren nach einem der Ansprüche 1 bis 8, **dadurch gekennzeichnet, dass** die Auswerteeinheit (4) den im zumindest einen Zeitpunkt (t) gleichzeitig erfassten Längsmesswert (X) und Quermesswert (Y, Z) zusätzlich verarbeitet, indem die Auswerteeinheit (4) einen Absolutwert des Längsmesswerts (X) und einen Absolutwert des Quermesswerts (Y, Z) bestimmt, um daraus die definierte mathematische Verknüpfung herzustellen und das Ergebnis aus der definierten mathematischen Verknüpfung zu ermitteln.

10. Seilbahn (20) mit einer Anzahl an Seilbahnstützen (1), wobei die Seilbahn (20) eine Anzahl an Seilbahnfahrzeugen (10) und ein Förderseil (2) umfasst, wobei im Betrieb der Seilbahn (20) die Seilbahnfahrzeuge (10) an dem Förderseil (2) in eine Förderrichtung (F) entlang der Anzahl an Seilbahnstützen (1) bewegbar sind, wobei eine Anzahl an Sensoren (3) an zumindest einer der Seilbahnstützen (1) vorgesehen ist und die Anzahl an Sensoren (3) eingerichtet ist, eine Bewegung der Seilbahnstütze (1) entlang der Förderrichtung (F) als einen Längsmesswert (X) zu erfassen und zumindest eine Bewegung der Seilbahnstütze (1) quer zur Förderrichtung (F) als einen Quermesswert (Y, Z) entlang einer Quermessrichtung (y, z) zu erfassen, **dadurch gekennzeichnet, dass** die Anzahl an Sensoren (3) eingerichtet ist, während des Betriebs oder im Stillstand der Seilbahn (20) in zumindest einem Zeitpunkt (t) gleichzeitig Längsmesswert (X) und Quermesswert (Y, Z) zu erfassen, **dass** die Seilbahn (20) eine Auswerteeinheit (4) umfasst, welche eingerichtet ist, den im zumindest einen Zeitpunkt (t) gleichzeitig erfassten Längsmesswert (X) und Quermesswert (Y, Z) von der Anzahl an Sensoren (3) zu empfangen und zu verarbeiten, wobei die Auswerteeinheit (4) weiters eingerichtet ist, eine definierte mathematische Verknüpfung zwischen den im zumindest einen Zeitpunkt (t) gleichzeitig erfassten Längsmesswert (X) und Quermesswert (Y, Z) herzustellen und ein Ergebnis aus der definierten mathematischen Verknüpfung zu ermitteln, **und dass** die Seilbahn (20) eine Steuereinheit (5) umfasst, wobei die Auswerteeinheit (4) eingerichtet ist, ein Problem an der Seilbahn (20) an die Steuereinheit (5) für eine Überwachung der Seilbahn (20) zu signalisieren, wenn durch das ermittelte Ergebnis eine vorgegebene Bedingung, welche in der Auswerteeinheit (4) hinterlegt ist, erfüllt ist, wobei die Steuereinheit (5) eingerichtet ist, die Seilbahn (20) abhängig von dem durch die Auswerteeinheit (4) signalisierten Problem zu steuern.

11. Seilbahn (20) nach Anspruch 10, **dadurch gekennzeichnet, dass** als die Anzahl an Sensoren (3) ein Sensor vorgesehen ist, welcher eingerichtet ist, Längsmesswert (X) und Quermesswert (Y, Z), vorzugsweise zwei Quermesswerte (Y, Z) in unterschiedliche Quermessrichtung (y, z), zu erfassen.

12. Seilbahn (20) nach Anspruch 10 oder 11, **dadurch gekennzeichnet, dass** an mehr als einer der Seilbahnstützen (1), vorzugsweise an jeder Seilbahnstütze (1), der Seilbahn (20) jeweils die Anzahl an Sensoren (3) vorgesehen ist.

13. Seilbahn (20) nach einem der Ansprüche 10 bis 12, **dadurch gekennzeichnet, dass** als jeweiliger Sensor der Anzahl an Sensoren (3) ein Beschleunigungssensor vorgesehen ist.
